(19) Europäisches Patentamt
European Patent Office
Office européen des brevets

(11) **EP 0 704 055 B1**

## (12) EUROPÄISCHE PATENTSCHRIFT

(45) Veröffentlichungstag und Bekanntmachung des Hinweises auf die Patenterteilung:
**06.05.1998 Patentblatt 1998/19**

(21) Anmeldenummer: **94908965.0**

(22) Anmeldetag: **10.03.1994**

(51) Int Cl.⁶: $G01N\ 29/02$

(86) Internationale Anmeldenummer:
**PCT/DE94/00257**

(87) Internationale Veröffentlichungsnummer:
**WO 95/00841 (05.01.1995 Gazette 1995/02)**

(54) **GERÄT NACH ART EINES INTERFEROMETERS ZUM QUANTITATIVEN NACHWEIS EINER GASART**

INTERFEROMETER-TYPE INSTRUMENT FOR THE QUANTITATIVE DETERMINATION OF A GAS TYPE

APPAREIL DU TYPE INTERFEROMETRE POUR LA DETERMINATION QUANTITATIVE D'UN TYPE DE GAZ

(84) Benannte Vertragsstaaten:
**AT BE CH DE DK FR IT LI NL SE**

(30) Priorität: **17.06.1993 DE 4319997**

(43) Veröffentlichungstag der Anmeldung:
**03.04.1996 Patentblatt 1996/14**

(73) Patentinhaber: **Seiler, Andreas**
**D-97877 Wertheim (DE)**

(72) Erfinder: **HANDKE, Klaus**
**D-97877 Wertheim (DE)**

(74) Vertreter: **Pöhner, Wilfried Anton, Dr.**
**Postfach 63 23**
**97013 Würzburg (DE)**

(56) Entgegenhaltungen:
**FR-A- 2 456 315        US-A- 3 040 562**

- **DATABASE WPI Section EI, Week 7501, Derwent Publications Ltd., London, GB; Class S03, AN 75-A0841W & SU,A,409 128 (LENINGRAD MED APP CONSTR. LENINGRAD AVIATION APP) 12. Juli 1974**
- **J. Krautkrämer et al., "Werkstoffprüfung mit Ultraschall", Springer-Verlag, Berlin, 1980, Seiten 584-587**

**Beschreibung**

Die Erfindung bezieht sich auf ein Gerät nach Art eines Interferometers mit einer Meßkammer, in der ein Sender angeordnet ist, der elektrisch mit einem Oszillator verbunden ist und Schallwellen abstrahlt, und dem ein Reflektor gegenübersteht, dessen Oberflächennormale parallel zur Richtung der Schallabstrahlung des Senders verläuft, sowie einer Anzeigeeinrichtung, der eine zur Impedanz oder Leistungsaufnahme des Senders proportionale, vorzugsweise elektrische Größe zugeführt wird, zum quantitativen Nachweis einer Komponente eines homogenen Mediums, das sich zwischen dem Sender und dem Reflektor befindet.

Geräte zur Identifizierung und zum quantitativen Nachweis von Gasen sind auf vielen Anwendungsgebieten anzutreffen. Typische Beispiele sind der Umweltschutzbereich, wo sie zur Bestimmung der Konzentration schädlicher Gase wie Ozon, Stickoxiden oder Kohlenmonoxyd dienen, sowie der (Vakuum-) Anlagenbau, wo sie bei der Lecksuche zur Detektion aus fertiggestellten Bauteilen austretenden oder in sie eindringenden Prüfgases (gewöhnlich Helium) eingesetzt werden. Bekannte, häufig eingesetzte Gasnachweisgeräte sind Gas-Chromatographen, Massenspektrometer und im Infrarot-Bereich arbeitende Absorptionsspektrometer.

Neben den hohen Gestehungskosten derartiger Geräte ist als nachteilig anzusehen, daß sie sich aufgrund ihrer Größe und ihres empfindlichen Aufbaus nur wenig zu einem mobilen Einsatz eignen. Bei den Massenspektrometern entstehen infolge der gewöhnlich durch Elektronenstoß realisierten Ionisation der Gase durch Dissoziation Spaltprodukte, die eine Identifikation des ursprünglichen Gases entscheidend erschweren. Ein Nachweis von Dämpfen ist praktisch unmöglich, da sie am Gaseinlaß oder in der eigentlichen Meßkammer kondensieren, so daß sie nicht mehr nachzuweisen sind, wobei die empfindlichen Oberflächen der Geräte jedoch beeinträchtigt werden können.

Ferner sind Geräte nach Art eines Interferometers bekannt, die zur Bestimmung des Mischungsverhältnisses von Flüssigkeiten (SU-40 91 28) oder zur Bestimmung der Anteile fester und flüssiger Inhaltsstoffe von Milch (US 3,040,562) dienen. Bei beiden Geräten erfolgt die Messung in der Weise, daß die Schallgeschwindigkeit über die Längendifferenz des Resonators zwischen zwei oder mehreren Resonanzen stehender Wellen bestimmt und aus dem derart ermittelten Wert das Verhältnis der Bestandteile, z.B. mittels einer Tabelle, berechnet wird. Diese Vorgehensweise ist jedoch sehr aufwendig, so daß die prinzipiell bekannte Übertragbarkeit des Verfahrens auf Gasgemische (J. Krautkrämer et al., "Werkstoffprüfung mit Ultraschall", Springer-Verlag, Berlin, 1980) bisher keine technisch verwertbare Anwendung findet.

Es sei vermerkt, daß aus US-A-3040562 ein Gerät nach Art eines Interferometers zur Untersuchung von Gasgemischen bekannt ist mit einer Meßkammer, in der ein Sender angeordnet ist, der elektrisch mit einem Oszillator verbunden ist und Schallwellen abstrahlt, und dem ein Reflektor gegenübersteht, dessen Oberflächennormale parallel zur Richtung der Schallabstrahlung des Senders verläuft, sowie einer Anzeigeeinrichtung, der eine zur Impedanz oder Leistungsaufnahme des Senders proportionale, vorzugsweise elektrische Größe zugeführt wird, zum quantitativen Nachweis einer Komponente eines homogenen Gasgemisches, das sich zwischen dem Sender und dem Reflektor befindet.

Ausgehend vom Stande der Technik liegt der Erfindung das Problem zugrunde, ein Gerät zum quantitativen Nachweis einer Gasart oder eines Dampfes so zu gestalten, daß die Investitionskosten reduziert, eine Dissoziation von Gasmolekülen unterbunden und ein mobiler Einsatz unschwer möglich ist.

Erfindungsgemäß wird das Problem, eine Gasart aus einem Gemisch von Gasen nachzuweisen, dadurch gelöst, daß der Sender Schallwellen konstanter Frequenz primär als Flächenwellen abstrahlt, für den Nachweis einer einzigen vorgegebenen komponente des zu messenden Gasgemisches der fest eingestellte Abstand zwischen dem Sender und dem Reflektor einem ganzzahligen Vielfachen eines Viertels des Quotienten aus der der vorgegebenen Komponente entsprechenden Schallgeschwindigkeit und der Frequenz des Oszillators entspricht und der von der Anzeigeeinrichtung angezeigte Wert eine Funktion der Differenz der zugeführten Größe und der bei luftgefüllter Meßkammer gemessenen Größe ist.

Der Kerngedanke der Erfindung besteht darin, das spezifisch unterschiedliche Schwingungsverhalten, d.h. die je nach Gasart unterschiedlichen Schallgeschwindigkeiten durch ein Interferometer nachzuweisen und der Anzeigeeinrichtung zuzuführen. Unter der Voraussetzung einer adiabatischen Zustandsänderung (falls die Schallfrequenz nicht sehr hoch ist), läßt sich die Schallgeschwindigkeit c für ein ideales Gas durch die Gleichung

$$c = (xRT/M)^{1/2}$$

berechnen, wobei x der Adiabatenexponent, R die universelle Gaskonstante, M das Molekulargewicht und T die absolute Temperatur ist. Anzumerken ist, daß auch die Dichte des Gases für die Berechnung der Schallgeschwindigkeit heranzuziehen ist, falls eine nicht-adiabatische Zustandsänderung vorliegt oder das Gas nicht als ideal zu betrachten ist. Die Schallgeschwindigkeit hängt somit entscheidend von der Masse eines Gasmoleküls oder -atoms ab; beispielsweise ist die Schallgeschwindigkeit des leichten Heliums bei 0 °C 971 m/s, während die des schwereren Sauerstoffs 315 m/s beträgt. Das zum Nachweis einzelner Gasarten dienende Interferometer ist aus einem hauptsächlich Flächenwellen abstrahlenden, elektrisch mit einem Oszillator konstanter Frequenz verbundenen Sender und einem dem Sender gegenüber stehenden Reflektor aufgebaut, wobei die Oberflächennormale des Reflektors zumindest näherungsweise parallel zur Richtung der Schallabstrahlung verläuft. Das Interferometer ist in einer Meßkammer montiert, wobei sich das zu untersuchende Gas ebenfalls in der Meßkammer befindet oder zwischen dem Sender und dem Reflektor hindurch geleitet wird. Beträgt der Abstand d zwischen dem Sender und dem Reflektor

$$d = (n + 1/4)\ c/f \text{ oder } d = (n + 3/4)\ c/f,$$

wobei n eine natürliche Zahl und f die Oszillatorfrequenz ist, entsteht, falls sich Gas mit der Schallgeschwindigkeit c zwischen Sender und Reflektor befindet, aufgrund des Gangunterschiedes zwischen der abgestrahlten und der reflektierten, den Sender erreichenden Schallwelle von einer halben Wellenlänge eine destruktive Interferenz, so daß die Leistungsaufnahme des Senders maximal bzw. seine Impedanz minimal wird. Der leicht zu gewinnende Meßwert über die Impedanz bzw. Leistungsaufnahme stellt somit ein direktes Maß über den Partialdruck des Gases mit der Schallgeschwindigkeit c dar, wobei der angezeigte Meßwert eine - nicht notwendigerweise lineare - Funktion der Differenz von dem Meßwert ist, der sich bei einer evakuierten oder luftgefüllten, kein nachzuweisendes Gas enthaltenden Meßkammer ergibt. Selbstverständlich ist der angezeigte Wert null, falls keine Abweichung vorhanden ist. Analog erhält man, falls

$$d = n\ c/f \text{ oder } d = (n + 1/2)\ c/f$$

ist, keinen Gangunterschied zwischen der abgestrahlten und der reflektierten Welle; es entsteht eine stehende Welle mit einer konstruktiven Interferenz, wobei die Leistungsaufnahme absinkt und die Impedanz ansteigt. Auch in diesem Fall ist die Leistungsaufnahme bzw. die Impedanz ein direktes Maß für den Partialdruck des Gases mit der Schallgeschwindigkeit c. Falls sich kein reines Gas, sondern ein Gemisch verschiedener Gase im Interferometer befindet, wirken sich die Moleküle oder Atome einer Gasart auf die Schallgeschwindigkeit c entsprechend ihres Mengenanteiles in dem zu stehenden Wellen angeregten Gemisch aus. Die zueinander parallele Ausrichtung des Senders und des Reflektors sowie die Ausbildung des Senders als Flächenstrahler sind erforderlich, um eine zum Nachweis auch kleiner Partialdrücke ausreichende Empfindlichkeit zu gewährleisten. Neben der Frequenzkonstanz des Oszillators ist erforderlich, daß der Abstand zwischen dem Sender und dem Reflektor exakt eingehalten wird.

Die Vorteile der Erfindung bestehen vornehmlich darin, daß das Gerät aufgrund des einfachen Aufbaus preiswert, leicht und transportabel gestaltet werden kann. Eine Dissoziation von Gasmolekülen findet mangels einer Ionisation nicht statt, so daß eine zerstörungsfreie Identifikation auch komplexerer Gasarten unschwer möglich ist. Da nur eine relativ wenig aufwendige Oszillatorschaltung und Nachweiseinrichtung erforderlich sind, kann die Stromversorgung auch netzunabhängig durch Batterien oder Akkumulatoren vorgenommen werden, so daß ein vom Einsatzort unabhängiger Betrieb erleichtert ist. Schließlich ist die hohe Empfindlichkeit des Geräts als vorteilhaft anzusehen.

Zur einwandfreien Funktion des erfindungsgemäßen Gerätes ist die Konstanz der Temperatur des Interferometers und des zu untersuchenden Gases von entscheidender Bedeutung. Bei besonders hohe Präzision erfordernden Messvorgängen ist daher vorgeschlagen, die Meßkammer bzw. das Interferometer mit einer geregelten Heizeinrichtung zu versehen.

Da die Schallgeschwindigkeit der zu detektierenden Gase zwischen ca. 200 und 1200 m/s beträgt und eine Schallwellenlänge im mm-Bereich erforderlich ist, um den Abstand zwischen dem Reflektor und dem Sender hinreichend genau justieren zu können, beträgt die vom Sender abzustrahlende Frequenz einige hundert kHz. Elektromagnetisch arbeitende, aus Lautsprechern bekannte Systeme sind für derartig hohe Frequenzen jedoch nicht einsetzbar, so daß ein geeigneter piezoelektrischer Kristall, vorzugsweise ein Quarz als Sender empfohlen ist. Zur Realisierung eines optimal hohen Schalldrucks bietet sich an, einen Kristall mit einer der Oszillatorfrequenz entsprechenden Eigenfrequenz zu verwenden, der in einer bevorzugten Ausgestaltung durch eine geeignete Schaltung gleichzeitig der Erzeugung einer konstanten Oszillatorfrequenz dient. Als Kristalle sind Längs- oder Dickenschwinger einsetzbar, wobei die konkrete Wahl der Kristallform vom Montageort in der Meßkammer abhängt.

Bei einer festen Oszillatorfrequenz und einem konstanten Abstand zwischen dem Sender und dem Reflektor ist nur jeweils eine, durch die jeweilige Schallgeschwindigkeit bestimmte Gasart untersuchbar. Um mit einem Gerät auch Gasarten verschiedener Schallgeschwindigkeiten nachweisen zu können, sind zwei alternativ oder gleichzeitig verwendbare Ausgestaltungen der Erfindung vorgeschlagen.

Der erste Vorschlag besteht darin, den Sender austauschbar zu gestalten, so daß durch einen Wechsel des Piezokristalls eine andere Sendefrequenz realisiert werden kann. Der Vorteil besteht darin, daß diese Ausgestaltung nur einen geringen mechanischen und elektronischen Aufwand erfordert, so daß ein einfacher, schneller und preiswerter Wechsel der Art des jeweils untersuchten Gases möglich ist. Nach dem Wechsel des Senders muß selbstverständlich auch eine andere Oszillatorfrequenz eingestellt werden.

Der zweite Vorschlag besteht darin, den Reflektor längs seiner Oberflächennormalen verschiebbar zu gestalten. Die resultierende Variation des Abstands zwischen Sender und Reflektor bewirkt ebenfalls eine Änderung der Schallgeschwindigkeit des nachgewiesenen Gases, wobei die Realisierbarkeit eines beliebigen Abstandes und damit einer beliebigen Schallgeschwindigkeit möglich ist. Hervorzuheben ist jedoch, daß eine mechanisch aufwendige Kalibrierung des Abstandes zwischen Sender und Reflektor vonnöten ist.

Zur Vergrößerung des Schalldrucks und zur Erhöhung der Nachweisempfindlichkeit ist ein aus zwei Sendern aufgebautes Interferometer bevorzugt. Der zweite, als Reflektor dienende Sender wird gleich- oder gegenphasig mit dem eigentlichen Sender angeregt, wobei der Abstand in Ruheposition weiterhin einem ganzzahligen Vielfachen eines Viertels des Quotienten aus der Schallgeschwindigkeit des nachzuweisenden Gases und der Frequenz des Oszillators entspricht und bei konstruktiver Interferenz eine gleichphasige Anregung und bei destruktiver Interferenz eine gegenphasige Beaufschlagung erfolgt.

Das erfindungsgemäße Gerät ist nicht nur zum Nachweis von Gasen, sondern auch für die Detektion verdampfbarer Stoffe einsetzbar, wobei jedoch zu beachten ist, daß sich der Dampf nicht dauerhaft auf dem Sender und/oder dem Reflektor absetzt. Um auch bei Raumtemperatur kondensierende Stoffe nachweisen zu können, ist denkbar, die Meßkammer bzw. den Sender und den Reflektor heizbar zu gestalten, so daß eine unerwünschte, eine Frequenz- und Güteänderung des Senders bewirkende Kondensation unterbunden ist.

Um Gase, die sich bereits vor einer Messung in der Meßkammer befinden und die Genauigkeit der Meßergebnisse beeinträchtigen können, zu evakuieren, bietet sich an, die Meßkammer mit einer Vakuumpumpe zu verbinden. Ein Unterdruck in der Meßkammer kann weiterhin zum Ansaugen der zu untersuchenden Gase verwendet werden.

Zur Lecksuche werden luftdicht abzuschließende Anlagen und Geräte häufig mit Helium gefüllt und mit einer Nachweissonde, einem sogenannten Schnüffler, abgetastet. Eine derartige Nachweissonde wird zweckmäßigerweise durch einen Schlauch, vorzugsweise aus Metall mit der - evakuierten - Meßkammer verbunden, wobei ein Abtasten der Schweißnähte und übrigen kritischen Flächen eines Anlagenteils leicht möglich ist. Metallische Schläuche sind bevorzugt, da sie im Gegensatz zu Kunststoffschläuchen nicht heliumdurchlässig sind, so daß keine Fehlmessungen entstehen können. Eine derartige Anordnung bietet sich auch zum Nachweis anderer Gase beispielsweise auf dem Gebiet des Umweltschutzes an.

Bevorzugt ist, die Anzeigeeinrichtung mit einem Schwellenwertschalter zu verbinden, der bei einer Unter- und/oder Überschreitung eines einstellbaren Anzeigewertes eine Alarmeinrichtung aktiviert. Die Einsatzmöglichkeiten einer derartigen Ausgestaltung der Erfindung sind vielfältig: beispielsweise kann der Schwellenwert einem maximal zulässigen Grenzwert der Ozonkonzentration oder einer anderen gesundheitsschädlichen Luftverunreinigung entsprechen. Weiterhin ist die Alarmeinrichtung in der Prozeßsteuerung und bei der Lecksuche im Anlagenbau einsetzbar, wobei als vorteilhaft anzusehen ist, daß keine ständige Kontrolle der Anzeigeeinrichtung durch das Bedienungspersonal erforderlich ist, so daß es sich besser auf die Handhabung der Meßsonde konzentrieren kann.

Weitere Einzelheiten, Merkmale und Vorteile der Erfindung lassen sich dem nachfolgenden Beschreibungsteil entnehmen, in dem anhand der Zeichnungen ein Ausführungsbeispiel der Erfindung näher erläutert wird. Sie zeigen in schematischer Darstellung in

Figur 1    eine Schnittzeichnung durch ein Gerät zum Nachweis von Gasen mit einem ortsfesten Reflektor

Figur 2    ein Gerät mit einem zweiten Sender als Reflektor

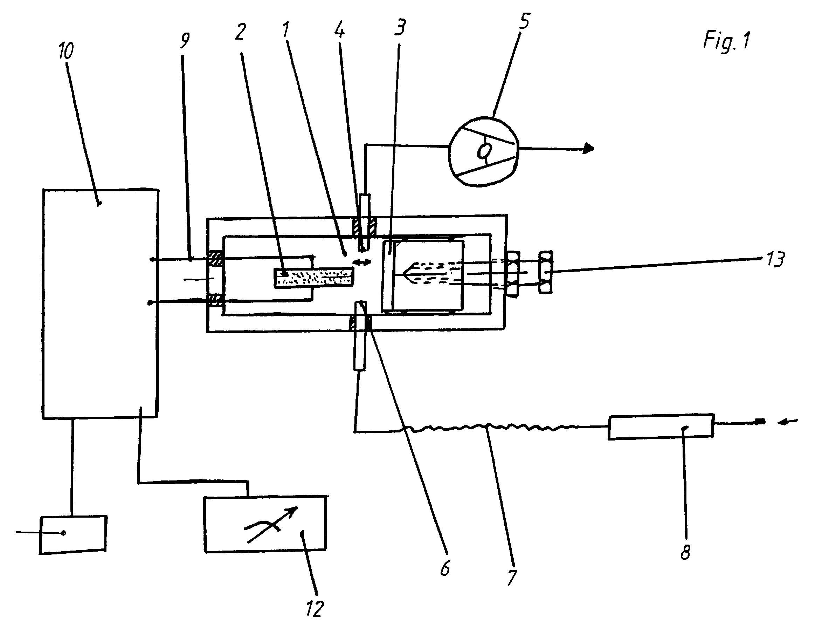

Das in Figur 1 dargestellte Gerät besteht in seinem grundsätzlichen Aufbau aus einer Meßkammer (1), in der ein aus einem Sender (2) und einem Reflektor (3) aufgebautes Interferometer angeordnet ist, sowie einer Vakuumpumpe (5), die mittels einer Durchführung (4) an der Meßkammer (1) angeschlossen ist. Das zu untersuchende Gas erreicht durch eine Meßsonde (8), einen Schlauch (7) und eine weitere Durchführung (6) den vom Sender und Reflektor eingeschlossenen Zwischenraum und wird anschließend durch die Vakuumpumpe (5) abgesaugt. Die Oszillator- und Auswertungseinheit (10) ist mit einer Stromversorgung (11), einer Anzeigeeinrichtung (12) und über Stromdurchführungen (9) mit dem piezoelektrischen Sender (2) verbunden.

Die Funktionsweise ist wie folgt:
Falls sich bei Anwesenheit eines Gases mit einer Schallgeschwindigkeit c eine Welle zwischen dem Sender (2) und dem Reflektor (3) ausbildet, erreicht die Impedanz des Senders (2) ein Minimum, falls die Interferenz zwischen der abgestrahlten und der vom Reflektor zurückgeworfenen Welle destruktiv ist. Bei konstruktiver Interferenz entsteht eine stehende Welle und die Impedanz wird maximal, wobei der Impedanzmeßwert bei konstruktiver und destruktiver Interferenz vom Partialdruck des jeweils untersuchten Gases abhängig ist und der Anzeigevorrichtung (12) zugeführt wird. Statt der Impedanz kann auch die - reziproke - Leistungsaufnahme des Senders (2) zur Auswertung herangezogen werden.

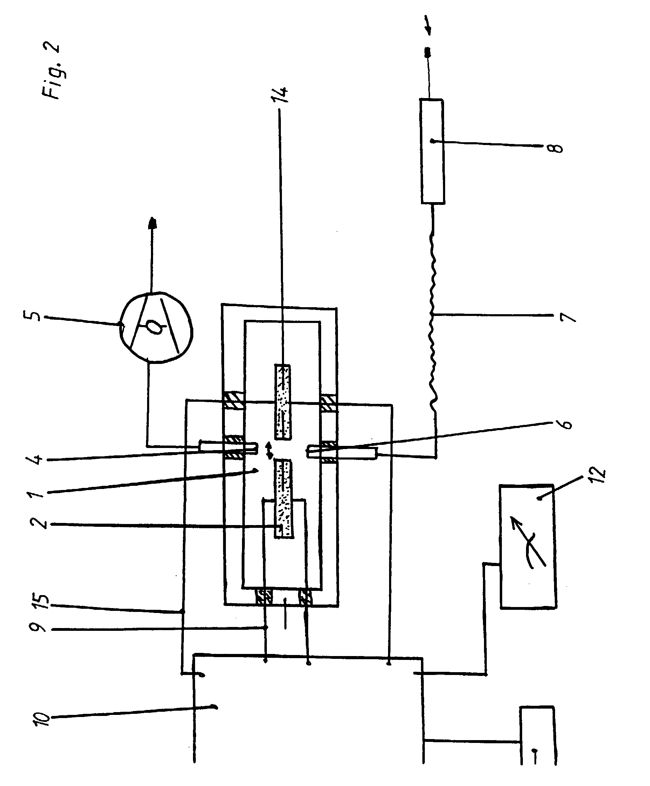

Im Gegensatz zu dem in Figur 1 dargestellten, durch eine Schraube (13) justierbaren Reflektor (3) ist das in Figur 2 dargestellte Interferometer mit einem als piezoelektrischen Sender (14) ausgeführten Reflektor versehen. Der Vorteil besteht in einer durch die Vergrößerung der Schallamplitude bedingten Verbesserung der Empfindlichkeit, wobei der Meßwert wie in Figur 1 durch die Impedanz bzw. die Leistungsaufnahme des Senders (2) ermittelt und der Anzeigeeinrichtung (12) zugeführt wird.

Im Ergebnis erhält man ein Gerät zum quantitativen Nachweis einer Gasart aus einem Gemisch von Gasen, das sich durch hohe Empfindlichkeit, niedrige Gestehungskosten, einen einfachen und robusten Aufbau sowie durch eine leichte Identifizierung auch komplexer, in konventionellen Massenspektrometern dissoziierender Moleküle auszeichnet.

## Patentansprüche

1. Gerät nach Art eines Interferometers zur Untersuchung von Gasgemischen mit einer Meßkammer, in der ein Sender angeordnet ist, der elektrisch mit einem Oszillator verbunden ist und Schallwellen abstrahlt, und dem ein Reflektor gegenübersteht, dessen Oberflächennormale parallel zur Richtung der Schallabstrahlung des Senders verläuft, sowie einer Anzeigeeinrichtung, der eine zur Impedanz oder Leistungsaufnahme des Senders proportionale, vorzugsweise elektrische Größe zugeführt wird, zum quantitativen Nachweis einer Komponente eines homogenen Gasgemisches, das sich zwischen dem Sender und dem Reflektor befindet, wobei

   - der Sender (2) Schallwellen konstanter Frequenz primär als Flächenwellen abstrahlt,

   - für den Nachweis einer einzigen vorgegebenen Komponente des zu messenden Gasgemisches der fest eingestellte Abstand zwischen dem Sender (2) und dem Reflektor (3) einem ganzzahligen Vielfachen eines Viertels des Quotienten aus der der vorgegebenen Komponente entsprechenden Schallgeschwindigkeit und der Frequenz des Oszillators entspricht

   - und der von der Anzeigeeinrichtung (12) angezeigte Wert eine Funktion der Differenz der zugeführten Größe und der bei einer evakuierten oder luftgefüllten, kein nachzuweisendes Gas enthaltenden Meßkammer gemessenen Größe ist.

2. Gerät nach Anspruch 1, **dadurch gekennzeichnet**, daß die Meßkammer (1) oder der Sender (2) und der Reflektor (3) mit einer geregelten Heizeinrichtung versehen sind.

3. Gerät nach Anspruch 1 oder 2, **dadurch gekennzeichnet**, daß der Sender (2) ein piezoelektrischer Kristall, vorzugsweise ein Quarz ist, dessen Eigenfrequenz der Oszillatorfrequenz entspricht.

4. Gerät nach Anspruch 3, **dadurch gekennzeichnet**, daß der Kristall (2) ein Längs-, Scheren- oder Rhombusschwinger ist.

5. Gerät nach einem der Ansprüche 1 bis 4, **dadurch gekennzeichnet**, daß der Sender (2) austauschbar ist.

6. Gerät nach einem der Ansprüche 1 bis 5, **dadurch gekennzeichnet**, daß der Reflektor (3) längs seiner Oberflächennormale verschiebbar ist.

7. Gerät nach einem der Ansprüche 1 bis 6, **dadurch gekennzeichnet**, daß der Reflektor (3) ein zweiter Sender ist, der mit dem Sender (2) gleich- oder gegenphasige Schallwellen abstrahlt.

8. Gerät nach einem der Ansprüche 1 bis 7, **dadurch gekennzeichnet**, daß das Gas Dampf eines sich nicht dauerhaft auf dem Sender (2) und/oder dem Reflektor (3) absetzenden Stoffes ist.

9. Gerät nach einem der Ansprüche 1 bis 8, **dadurch gekennzeichnet**, daß die Meßkammer (1) mit einer Vakuumpumpe (5) verbunden ist.

10. Gerät nach einem der Ansprüche 1 bis 9, **dadurch gekennzeichnet,** daß die Meßkammer über einen luftdichten Schlauch (7), der vorzugsweise aus Metall besteht, mit einer Meßsonde (8) verbunden ist.

11. Gerät nach einem der Ansprüche 1 bis 10, **dadurch gekennzeichnet**, daß die Anzeigeeinrichtung (12) mit einem Schwellenwertschalter verbunden ist, der bei einer Unter- und/oder Überschreitung eines einstellbaren Anzeigewertes eine vorzugsweise akustisch und/oder optisch arbeitende Alarmeinrichtung aktiviert.

## Claims

1. Device in the nature of an interferometer for the investigation of gas mixtures having a measuring chamber, in which a transmitter is disposed, which is connected electrically to an oscillator and emits sound waves, and opposite which stands a reflector, whose normal to surface extends parallel to the direction of the sound radiation of the transmitter, as well as a display device, which is supplied a proportional, preferably electric quantity for impedance or power consumption of the transmitter, for the quantitative detection of a constituent of a homogenous gas mixture, which is between the transmitter and the reflector, whereby

   - transmitter (2) emits sound waves of a constant frequency primarily as surface waves,

   - for the detection of a single specified constituent of the gas mixture to be measured the permanently set distance between transmitter (2) and reflector (3) corresponds to an integral multiple of a quarter of the quotient from the sound speed corresponding to the specified constituent and the frequency of the oscillator

- and the value displayed by display device (12) is a function of the difference of the supplied quantity and the measured quantity in the case of an evacuated or air-filled measuring chamber containing no gas to be detected.

2. Device according to claim 1, **wherein** said measuring chamber (1) or said transmitter (2) and said reflector (3) are provided with a regulated heating device.

3. Device according to claim 1 or 2, **wherein** said transmitter (2) is a piezoelectric crystal, preferably a quartz, whose natural frequency corresponds to the oscillator frequency.

4. Device according to claim 3, **wherein** said crystal (2) is a longitudinal, a shear-mode or a rhombic oscillator.

5. Device according to one of claims 1 to 4, **wherein** said transmitter (2) is replaceable.

6. Device according to one of claims 1 to 5, **wherein** said reflector (3) can be shifted along its normal to surface.

7. Device according to one of claims 1 to 6, **wherein** said reflector (3) is a second transmitter, which emits sound waves that are in phase or in phase opposition to said transmitter (2).

8. Device according to one of claims 1 to 7, **wherein** the gas is vapour of a medium that does not settle permanently on said transmitter (2) and/or said reflector (3).

9. Device according to one of claims 1 to 8, **wherein** said measuring chamber (1) is connected to a vacuum pump (5).

10. Device according to one of claims 1 to 9, **wherein** said measuring chamber is connected to a measuring sensor (8) which consists preferably of metal.

11. Device according to one of claims 1 to 10, **wherein** said display device (12) is connected to a critical value trigger which activates a preferably acoustically and/or optically functioning alarm device if an adjustable display value is undershot or exceeded.

**Revendications**

1. Appareil du type d'un interféromètre pour examiner des mélanges gazeux avec une chambre de mesure dans laquelle est placé un émetteur relié électriquement à un oscillateur et émettant des ondes sonores et qui a face à lui un réflecteur dont la normale de sa surface est parallèle à la direction d'émission des ondes sonores de l'émetteur ainsi qu'un dispositif indicateur auquel est amené une grandeur, de préférence électrique, proportionnelle à l'impédance ou à la puissance absorbée de l'émetteur aux fins de détecter quantitativement un composant d'un mélange gazeux homogène qui se trouve entre l'émetteur et le réflecteur et,

- l'émetteur (2) émettant des ondes sonores à une fréquence constante, ondes qui sont primairement des ondes planes,

- pour la détection de la présence d'un seul composant donné du mélange gazeux à mesurer, la distance réglée de façon fixe entre l'émetteur (2) et le réflecteur (3) correspondant à un nombre entier multiple d'un quart du quotient de la vitesse de l'onde correspondant au composant donné et de la fréquence de l'oscillateur

- et la valeur indiquée par le dispositif indicateur (12) étant une fonction de la différence de la grandeur amenée et d'une grandeur mesurée pour une chambre de mesure évacuée ou remplie d'air ne contenant pas de gaz à déceler.

2. Appareil selon la revendication 1 **caractérisé par le fait que** la chambre de mesure (1) ou l'émetteur (2) et le réflecteur (3) sont équipés d'un dispositif de chauffage réglé.

3. Appareil selon la revendication 1 ou 2 **caractérisé par le fait que** l'émetteur (2) est un cristal piézo-électrique, en particulier un quartz, dont la fréquence propre correspond à la fréquence de l'oscillateur.

4. Appareil selon la revendication 3 **caractérisé par le fait que** le cristal (2) est un oscillateur en longueur, en parallélogramme ou en losange.

5. Appareil selon une des revendications 1 à 4, **caractérisé par le fait que** l'émetteur (2) est remplaçable.

6. Appareil selon une des revendications 1 à 5, **caractérisé par le fait que** le réflecteur (3) peut être déplacé le long de la normale de sa surface.

7. Appareil selon une des revendications 1 à 6, **caractérisé par le fait que** le réflecteur (3) est un second émetteur qui émet avec l'émetteur (2) des ondes sonores de même phase ou de phase opposée.

8. Appareil selon une des revendications 1 à 7, **caractérisé par le fait que** le gaz est une vapeur d'une substance qui ne se dépose pas durablement sur l'émetteur (2) et/ou sur le réflecteur.

9. Appareil selon une des revendications 1 à 8, **caractérisé par le fait que** la chambre de mesure (1) est reliée à une pompe à vide (5).

10. Appareil selon une des revendications 1 à 9, **caractérisé par le fait que** la chambre de mesure est reliée à une tête de mesure (8) par l'intermédiaire d'un tuyau imperméable à l'air (7) qui est de préférence en métal,

11. Appareil selon une des revendications 1 à 10 **caractérisé par le fait que** le dispositif indicateur (12) est relié à un commutateur de valeur seuil qui active un dispositif d'alarme, de préférence acoustique et/ou optique, en cas de sous-dépassement ou de dépassement d'une valeur d'indication réglable.

Fig. 1

EP 0 704 055 B1

Fig. 2